# EUROPEAN PATENT APPLICATION

(11) **EP 4 610 411 A1**
(43) Date of publication of application: **03.09.2025**
(21) Application number: 23882580.6
(22) Date of filing: 23.10.2023
(51) Int. Cl.: D01F 6/48, C08F 290/04, C08L 27/06, C08L 51/06

(54) **VINYL CHLORIDE-BASED FIBER AND METHOD FOR MANUFACTURING SAME**

(30) Priority: 26.10.2022 JP 2022171603
(71) Applicant: Kaneka Corporation, Osaka-shi, Osaka 530-8288 (JP)
(72) Inventor: YOSHIDA, Naoto, Settsu-shi, Osaka 566-0072 (JP)
(74) Representative: Vossius & Partner Patentanwälte Rechtsanwälte mbB
(86) International application number: PCT/JP2023/038176
(87) International publication number: WO 2024/090375

(57) **Abstract**

The present invention relates to a vinyl chloride-based fiber that includes a vinyl chloride-based resin composition. The vinyl chloride-based resin composition includes a vinyl chloride-based resin A and a vinyl chloride-based resin B. The vinyl chloride-based resin A is a copolymer of vinyl chloride and a macromonomer and the vinyl chloride-based resin B is a vinyl chloride-based resin other than the vinyl chloride-based resin A. A method for producing the vinyl chloride-based fiber includes a step of obtaining undrawn yarn by melt-spinning the vinyl chloride-based resin composition.

## Description

### Technical Field

The present invention relates to a vinyl chloride-based fiber and a method for producing the same.

### Background Art

Vinyl chloride-based fibers are generally produced as fibers with a small fineness through dry spinning, or wet spinning in which a solvent is used. However, when a solvent is used, a solvent removal step is required, which leads to high cost to maintain the equipment therefor and recover the solvent.

Meanwhile, Patent Document 1 describes, as fibers for artificial hair for use in a hairpiece and the like, vinyl chloride-based fibers obtained by melt-spinning a vinyl chloride-based resin to which a plasticizer and a heat stabilizer have been blended.

### Prior Art Documents

### Patent Document

[Patent Document 1] WO 2006/035863

### Disclosure of Invention

### Problem to be Solved by the Invention

However, in Patent Document 1, the undrawn yarn of vinyl chloride-based fibers that are produced in the examples has a single fiber fineness of about 170 dtex, and is required to have a reduced fineness for use as a fiber for clothing and the like. Increasing the blend amount of the plasticizer to improve the spinnability makes it possible to reduce the fineness of vinyl chloride-based fibers, but there is a problem in that the thermal resistance deteriorates.

To address the aforementioned conventional problem, the present invention provides a vinyl chloride-based fiber with excellent spinnability and favorable thermal resistance, and a method for producing the same.

### Means for Solving Problem

One or more embodiments of the present invention relate to a vinyl chloride-based fiber including a vinyl chloride-based resin composition, wherein the vinyl chloride-based resin composition includes a vinyl chloride-based resin A and a vinyl chloride-based resin B, and the vinyl chloride-based resin A is a copolymer of vinyl chloride and a macromonomer and the vinyl chloride-based resin B is a vinyl chloride-based resin other than the vinyl chloride-based resin A.

One or more embodiments of the present invention relate to a method for producing the vinyl chloride-based fiber above, including a step of obtaining undrawn yarn by melt-spinning a vinyl chloride-based resin composition, wherein the vinyl chloride-based resin composition includes a vinyl chloride-based resin A and a vinyl chloride-based resin B, and the vinyl chloride-based resin A is a copolymer of vinyl chloride and a macromonomer and the vinyl chloride-based resin B is a vinyl chloride-based resin other than the vinyl chloride-based resin A.

### Effects of the Invention

With the present invention, it is possible to provide a vinyl chloride-based fiber with excellent spinnability and favorable thermal resistance.

Also, with the present invention, it is possible to stably produce a vinyl chloride-based fiber with favorable thermal resistance through melt-spinning.

### Description of the Invention

The inventor of the present invention conducted numerous studies in order to suppress a decrease in thermal resistance of vinyl chloride-based fibers and improve spinning stability thereof during melt-spinning. As a result, it was found that, by using a vinyl chloride-based resin A that is a copolymer of vinyl chloride and a macromonomer together with a vinyl chloride-based resin B that is another vinyl chloride-based resin (containing no macromonomer), the spinning stability was improved during melt-spinning, and vinyl chloride-based fibers with favorable thermal resistance and a small fineness were obtained. In particular, it was surprisingly found that, by using a macromonomer with a mass average molecular weight (also referred to as a "weight average molecular weight") of 1000 to 10000 having a polymer composed of ethylenically unsaturated monomers with a double bond in the main chain, the spinning stability was remarkably improved during melt-spinning while the decrease in thermal resistance was suppressed, and thus vinyl chloride-based fibers with a small fineness (favorably, the fineness of undrawn yarn is 30 dtex or less) were obtained. It is assumed that, by setting the mass average molecular weight of the macromonomer, which is a soft component and serves as the starting point of thermal fluidization, to be within a range of 1000 to 10000, the flowability of the copolymer of vinyl chloride and the macromonomer was improved, thus making it possible to spin the vinyl chloride-based resin composition containing this copolymer into fine undrawn yarn through melt-spinning.

In this specification, the vinyl chloride-based resin is a polymer containing vinyl chloride as a main component and contains vinyl chloride in an amount of 50 mass% or more. In the following description, "vinyl chloride" refers to a vinyl chloride monomer unless otherwise stated.

In this specification, when a numerical range is shown using "to", the numerical range includes the values at both ends (i.e., the upper limit and the lower limit). For example, a numerical range "X to Y" is a range that includes X and Y, which are the values at the two ends of the range. Also, when a plurality of numerical ranges are described in this specification, numerical ranges obtained by using the upper limits and the lower limits of the different numerical ranges in combination as appropriate are included. Also, when a plurality of upper limits and lower limits of numerical ranges are separately described in this specification, numerical ranges obtained by using the upper limits and the lower limits in combination as appropriate are included.

### Vinyl Chloride-Based Resin A

The vinyl chloride-based resin A is a copolymer of vinyl chloride and a macromonomer. The vinyl chloride-based resin A preferably includes vinyl chloride in an amount of 50 to 99 mass% and the macromonomer in an amount of 1 to 50 mass%, more preferably vinyl chloride in an amount of 60 to 97 mass% and the macromonomer in an amount of 3 to 40 mass%, and even more preferably vinyl chloride in an amount of 70 to 95 mass% and the macromonomer in an amount of 5 to 30 mass%, for example, from the viewpoint of the polymerization stability and the mixability with the vinyl chloride-based resin B, but there is no particular limitation thereto.

The vinyl chloride-based resin A may include, in addition to vinyl chloride and the macromonomer, another monomer copolymerizable therewith, such as vinylidene chloride, a vinyl acetate monomer, and an α-olefin compound having no reactive functional group after polymerization (e.g., ethylene, propylene, or the like) as long as the effects of the present invention are not inhibited. The vinyl chloride-based resin A may include the other monomer in an amount of 20 mass% or less, 10 mass% or less, or 5 mass% or less.

The term "macromonomer" generally means an oligomer molecule having a reactive functional group (also referred to as a "polymerizable functional group") at a terminus of the polymer. In one or more embodiments of the present invention, a macromonomer having a polymer composed of ethylenically unsaturated monomers with a double bond in the main chain can be favorably used.

In one or more preferred embodiments of the present invention, the macromonomer preferably has a mass average molecular weight (Mw) of 1000 to 10000, more preferably 1500 to 9500, even more preferably 2000 to 9000, and particularly preferably 2500 to 8000. When Mw of the macromonomer is within the range above, the stability of polymerization with vinyl chloride is excellent, the flowability of the vinyl chloride-based resin A is likely to be improved, and the fineness of undrawn yarn of vinyl chloride-based fibers containing the vinyl chloride-based resin A is likely to be reduced. In this specification, Mw of the macromonomer is a value measured through gel permeation chromatography (also referred to as a "GPC method") using polystyrene as a standard polymer and chloroform as a mobile phase (eluate). For example, Mw can be measured using HLC-8320 GPC System manufactured by Tosoh Corporation by injecting a sample solution with a polymer concentration of 1 mg/mL thereinto under the conditions that chloroform is used as a mobile phase, a polystyrene gel column TSKgel SuperHM-N manufactured by Tosoh Corporation is used, and the column temperature is 40°C.

Various types of ethylenically unsaturated monomers can be used as the ethylenically unsaturated monomers that constitute the main chain polymer of the macromonomer. Examples thereof include (meth)acrylic acid, (meth)acrylic acid ester-based monomers, styrene-based monomers, nitrile group-containing vinyl-based monomers, amide group-containing vinyl-based monomers, fluorine-containing vinyl monomers, silicon-containing vinyl monomers, maleimide-based monomers, vinyl esters, alkenes, conjugated dienes, and the like. In addition, it is also possible to use maleic anhydride, maleic acid, maleic acid monoalkyl esters, and maleic acid dialkyl esters; fumaric acid, fumaric acid monoalkyl esters, and fumaric acid dialkyl esters; allyl chloride, allyl alcohol, and the like. In this specification, the term "(meth)acrylic acid" refers to acrylic acid and/or methacrylic acid.

Examples of the (meth)acrylic acid ester-based monomers include (meth)acrylic acid-aliphatic hydrocarbon (e.g., an alkyl having 1 to 18 carbon atoms) esters, (meth)acrylic acid-alicyclic hydrocarbon esters, (meth)acrylic acid-aromatic hydrocarbon esters, (meth)acrylic acid-aralkyl esters, and the like. Examples of the (meth)acrylic acid-aliphatic hydrocarbon esters include methyl (meth)acrylate, ethyl (meth)acrylate, isopropyl (meth)acrylate, n-butyl (meth)acrylate, isobutyl (meth)acrylate, stearyl (meth)acrylate, and the like. Examples of the (meth)acrylic acid-alicyclic hydrocarbon esters include cyclohexyl (meth)acrylate, isobomyl (meth)acrylate, and the like. Examples of the (meth)acrylic acid-aromatic hydrocarbon esters include phenyl (meth)acrylate, toluyl (meth)acrylate, and the like. Examples of the (meth)acrylic acid-aralkyl esters include benzyl (meth)acrylate, and the like.

For example, a (meth)acrylic acid ester-based monomer having a heteroatom in an ester moiety may be used as the (meth)acrylic acid ester-based monomer. The heteroatom is not particularly limited, and examples thereof include oxygen (O), fluorine (F), nitrogen (N), and the like. Specific examples of the (meth)acrylic acid ester-based monomer having a heteroatom in an ester moiety include 2-methoxyethyl (meth)acrylate, 3-methoxybutyl (meth)acrylate, 2-hydroxyethyl (meth)acrylate, glycidyl (meth)acrylate, 2-aminoethyl (meth)acrylate, 2,2,2-trifluoroethyl (meth)acrylate, and the like.

Examples of the styrene-based monomers include styrene, vinyltoluene, α-methylstyrene, chlorostyrene, styrenesulfonic acid, salts thereof, and the like. Examples of the nitrile group-containing vinyl-based monomers include acrylonitrile, methacrylonitrile, and the like. Examples of the amide group-containing vinyl-based monomers include acrylamide, methacrylamide, and the like. Examples of the fluorine-containing vinyl monomers include perfluoroethylene, perfluoropropyrene, vinylidene fluoride, and the like. Examples of the silicon-containing vinyl monomers include vinyltrimethoxysilane, vinyltriethoxysilane, and the like. Examples of the maleimide-based monomers include maleimide, methylmaleimide, ethylmaleimide, butylmaleimide, phenylmaleimide, cyclohexylmaleimide, and the like. Examples of the vinyl esters include vinyl acetate, vinyl propionate, vinyl pivalate, vinyl benzoate, vinyl cinnamate, and the like. Examples of the alkenes include ethylene, propylene, and the like. Examples of the conjugated dienes include butadiene, isoprene, and the like.

The ethylenically unsaturated monomer is preferably one or more selected from the group consisting of the (meth)acrylic acid ester-based monomers, the styrene-based monomers, the nitrile group-containing vinyl-based monomers, and the amide group-containing vinyl-based monomers from the viewpoint of the melt processability such as stringiness, physical properties, and the like of the vinyl chloride-based resin A. The ethylenically unsaturated monomer is more preferably one or more selected from the group consisting of the (meth)acrylic acid ester-based monomers and the nitrile group-containing vinyl-based monomers, and even more preferably an acrylic acid ester-based monomer.

One of the ethylenically unsaturated monomers described above may be used alone, or two or more may be copolymerized.

The macromonomer has at least one reactive functional group per molecule at a molecular terminus. For example, the macromonomer may have reactive functional groups at both molecular termini, but it is preferable that it has a reactive functional group at one molecular terminus from the viewpoint of improving the flowability of the vinyl chloride-based resin A. Examples of the reactive functional group include functional groups selected from the group consisting of an allyl group, a vinylsilyl group, a vinyl ether group, a dicyclopentadienyl group, and groups with a polymerizable carbon-carbon double bond represented by General Formula (1) below, and the like. The reactive functional group is preferably a functional group with a polymerizable carbon-carbon double bond represented by General Formula (1) below from the viewpoint of excellent reactivity with vinyl chloride.

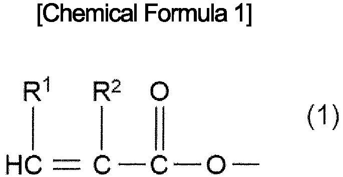

In General Formula (1) above, R¹ and R² are the same or different, and individually represent hydrogen or an organic group having 1 or 20 carbon atoms. The organic group may be an alkyl group having 1 to 20 carbon atoms, and the alkyl group may have undergone substitution. Specific examples of R¹ and R² are not particularly limited, and they are preferably groups selected from the group consisting of -H, -CH₃, -(CH₂)ₙCH₃ (n represents an integer of 1 to 19), -C₆H₅, -CH₂OH, and -CN, and more preferably groups selected from the group consisting of -H and -CH₃. The reactive functional group is preferably an acryloyl group, which is a group represented by General Formula (1) above with both R¹ and R² being hydrogen, or a crotonate group, which is a group represented by General Formula (1) above with R¹ being -CH₃ and R² being hydrogen, and more preferably an acryloyl group, from the viewpoint that improving the flowability of the vinyl chloride-based resin A makes it likely to improve the spinning stability of the vinyl chloride-based resin composition containing the vinyl chloride-based resin A and to reduce the fineness of undrawn yarn made of the vinyl chloride-based fibers.

A method for producing the macromonomer is not particularly limited, and a conventionally known method such as a radical polymerization method can be used. Examples thereof include known methods such as a common radical polymerization method and a controlled radical polymerization method described in JP 2006-299240A and the like, and any production method may be used, but the controlled radical polymerization method is generally used. Furthermore, a living radical polymerization method is preferably used due to ease of controlling, and an atom transfer radical polymerization method is particularly preferable. For example, in the atom transfer radical polymerization method, an organic halide, a halogenated sulfonyl compound, or the like may be used as a polymerization initiator and a transition metal complex may be used as a polymerization catalyst. Specifically, the method described in JP 2005-232209A or the like may be used. A macromonomer can be obtained by using, for example, the method described in JP 2005-232209A to introduce a reactive functional group into a polymer having a halogen group at a terminus that is obtained using the atom transfer radical polymerization method. The molecular weight of the macromonomer can be adjusted by adjusting the addition ratios of the ethylenically unsaturated monomer and the polymerization initiator. For example, reducing the ratio of a monomer to the polymerization initiator (monomer / polymerization initiator) makes it possible to reduce the molecular weight of the macromonomer.

In one or more embodiments of the present invention, a graft copolymer is produced through copolymerization of vinyl chloride and the macromonomer, and a vinyl chloride-based resin composition containing the graft copolymer (vinyl chloride-based resin A) is melt-spun, thus making it possible to avoid a decrease in the glass-transition temperature of the obtained vinyl chloride-based fibers and maintain the thermal resistance.

In one or more embodiments of the present invention, a method for producing a copolymer of vinyl chloride and the macromonomer is not particularly limited, but copolymerization in an aqueous medium is preferable from the viewpoint of ease of controlling polymerization and ease of separating and washing polymer particles after the polymerization. Examples of the method of polymerization in an aqueous medium include a suspension polymerization method, a fine suspension polymerization method, an emulsion polymerization method, and the like. In particular, the suspension polymerization method or the fine suspension polymerization method is preferable from the viewpoint of the polymerization stability, and the suspension polymerization method is more preferable from the viewpoint of suppressing initial coloration of the fibers.

In the suspension polymerization method or fine suspension polymerization method, a copolymerization reaction can be conducted at a predetermined polymerization temperature such as 25°C to 90°C and preferably at 40°C to 70°C after monomers (vinyl chloride, the macromonomer, and other monomers), a suspension-dispersion agent, a polymerization initiator, a chain transfer agent, and the like are charged as needed collectively, or intermittently or continuously.

The suspension-dispersion agent is not particularly limited, and any suspension-dispersion agent can be used as long as the object of the present invention is not compromised. As such a suspension-dispersion agent, it is possible to use, for example, organic macromolecular dispersion agents such as partially saponified polyvinyl acetate; water-soluble cellulose ethers (e.g., methyl cellulose, hydroxyethyl cellulose, hydroxypropyl cellulose, hydroxypropylmethyl cellulose, and carboxymethyl cellulose); polyethylene oxide; polyvinyl pyrrolidone; polyacrylic acid; a vinyl acetate-maleic acid copolymer; styrenemaleic acid copolymer; gelatin; and starch. One of these agents may be used alone, and two or more of them can also be used in combination. The amount of the suspension-dispersion agent used may be, for example, 0.01 to 0.1 parts by mass with respect to 100 parts by mass of the total amount of the monomers.

The polymerization initiator is not particularly limited, and it is sufficient that an oil-soluble polymerization initiator is added in such an amount that does not compromise the object of the present invention, but it is preferable to use an oil-soluble polymerization initiator with a 10-hour half-life temperature of 30°C to 65°C among these initiators. Examples of such an oil-soluble polymerization initiator include organic peroxide-based polymerization initiators such as diisobutyl peroxide, cumyl peroxyneodecanoate, diisopropyl peroxydicarbonate, di(2-ethylhexyl) peroxydicarbonate, t-butyl peroxypivalate, t-butyl peroxyneodecanoate, 1,1,3,3-tetramethylbutyl peroxyneodecanoate, dilauroyl peroxide, and di(3,5,5-trimethylhexanoyl) peroxide; and azo-based polymerization initiators such as 2,2'-azobisisobutyronitrile, 2,2'-azobis(4-methoxy-2,4-dimethylvaleronitrile), and 2,2'-azobis-(2,4-dimethylvaleronitrile). One of these oil-soluble polymerization initiators may be used alone, and two or more of them can also be used in combination. The amount of the polymerization initiator used may be, for example, 0.01 to 1 part by mass with respect to 100 parts by mass of the total amount of the monomers.

The oil-soluble polymerization initiator can be added without particular limitation, but when, for example, it is used in the form of an organic solvent solution, examples of the organic solvent include aromatic hydrocarbons such as toluene, xylene, and benzene; aliphatic hydrocarbons such as hexane and isoparaffin; ketones such as acetone and methyl ethyl ketone; and esters such as ethyl acetate, butyl acetate, and dioctyl phthalate. One of these organic solvents may be used alone, and two or more of them can also be used in combination.

The chain transfer agent is not particularly limited, and any chain transfer agent can be used as long as the object of the present invention is not compromised. Favorable examples of such a chain transfer agent include alkyl mercaptans with the main chain having 2 to 12 carbon atoms, and mercaptoalcohols. Examples of the alkyl mercaptans with the main chain having 2 to 12 carbon atoms include n-octyl mercaptan (also referred to as "1-octanethiol"), t-octyl mercaptan, n-dodecyl mercaptan, t-dodecyl mercaptan, 2-ethylhexyl thioglycol, and the like, and examples of the mercaptoalcohols include 2-mercaptoethanol and the like.

In the suspension polymerization method or fine suspension polymerization method, a surfactant, a dispersion assistant, an antioxidant, a polymerization degree regulator, a particle diameter regulator, a pH regulator, a gelation improving agent, an antistatic agent, a stabilizer, an antiscale agent, and the like can be appropriately used as needed, as long as the object of the present invention is not compromised.

With the suspension polymerization or fine suspension polymerization, a copolymer of vinyl chloride and the macromonomer is obtained as a latex or slurry, but a method for obtaining a powdery copolymer resin by drying the copolymer in the latex or slurry form is not particularly limited, and examples thereof include a method in which a latex or slurry is dehydrated and then dried using a hot-air dryer or the like, and other methods.

In the vinyl chloride-based resin A, the viscosity-average degree of polymerization of the stem polymer that includes vinyl chloride and another monomer is not particularly limited, but is preferably 500 to 900, more preferably 550 to 850, and even more preferably 600 to 750, from the viewpoint of the balance between processability and practical physical properties. Also, in the vinyl chloride-based resin A, the viscosity-average degree of polymerization of the branch polymer composed of the macromonomer is not particularly limited, but is preferably 20 to 95, more preferably 20 to 75, even more preferably 20 to 55, and even more preferably 20 to 35, from the viewpoint of the balance between processability and practical physical properties. The viscosity-average degree of polymerization of the vinyl chloride-based resin A refers to the K value measured in conformity with JIS K 7367-2: 2002.

From the viewpoint of improving the flowability of the vinyl chloride-based resin composition to further improve the melt spinnability, the vinyl chloride-based resin A preferably has a Method-B flow value of 15×10⁻² cm³/s or more, more preferably 20×10⁻² cm³/s or more, even more preferably 30×10⁻² cm³/s or more, even more preferably 40×10⁻² cm³/s or more, even more preferably 50×10⁻² cm³/s or more, and particularly preferably 60×10⁻² cm³/s or more, the Method-B flow value being measured at 180°C and 98 N using a Koka-type flow tester in conformity with "Test Method for Flow of Thermoplastic Resin" specified in Annex C of JIS K 7210-1: 2014. The upper limit of the Method-B flow value of the vinyl chloride-based resin A is not particularly limited, but may be 100×10⁻² cm³/s or less or 90×10⁻² cm³/s or less from the viewpoint of, for example, preventing the deterioration of the melt spinnability caused by low melt viscosity.

### Vinyl Chloride-Based Resin B

A vinyl chloride-based resin (a vinyl chloride-based resin containing no macromonomer) other than the vinyl chloride-based resin A can be appropriately used as the vinyl chloride-based resin B. For example, a conventionally known vinyl chloride homopolymer, a vinyl chloride copolymer of vinyl chloride and another monomer (comonomer), or the like can be appropriately used as the vinyl chloride-based resin B. In the vinyl chloride copolymer, the comonomer is not particularly limited as long as it is copolymerizable with vinyl chloride, and typical examples thereof include vinyl ester compounds such as vinyl acetate and vinyl propionate, acrylic acid ester compounds such as butyl acrylate and 2-ethylhexyl acrylate, α-olefins such as ethylene and propylene, acrylonitrile, and the like. The content of the comonomer in the vinyl chloride copolymer is not particularly limited, but the content of the comonomer is preferably 2 to 30 mass% from the viewpoint of the spinning stability, the yarn properties, and the like. More specifically, the vinyl chloride copolymer may include, for example, vinyl chloride in an amount of 70 to 98 mass% and the comonomer in an amount of 2 to 30 mass%, or vinyl chloride in an amount of 75 to 95 mass% and the comonomer in an amount of 5 to 25 mass%, or vinyl chloride in an amount of 80 to 95 mass% and the comonomer in an amount of 5 to 20 mass%.

It is preferable that the vinyl chloride-based resin B includes a vinyl chloride homopolymer from the viewpoint of the thermal resistance. It is preferable that one or more selected from the group consisting of a vinyl chloride-ethylene copolymer and a vinyl chloride-vinyl acetate copolymer are included in addition to the vinyl chloride homopolymer from the viewpoint of the spinnability, and it is more preferable that the vinyl chloride homopolymer and the vinyl chloride-vinyl acetate copolymer are used together from the viewpoint of the spinnability. When the vinyl chloride homopolymer and the vinyl chloride-vinyl acetate copolymer are used together, the vinyl chloride-based resin B preferably includes the vinyl chloride-vinyl acetate copolymer in an amount of 0.5 to 20 parts by mass, more preferably 1 to 10 parts by mass, and even more preferably 2 to 5 parts by mass, with respect to 100 parts by mass of the vinyl chloride homopolymer from the viewpoint of the spinnability.

The viscosity-average degree of polymerization of the vinyl chloride-based resin B is preferably 400 to 1700 from the viewpoint of the spinnability. When the vinyl chloride-based resin B is a vinyl chloride homopolymer, the viscosity-average degree of polymerization is preferably 600 to 1300, more preferably 800 to 1200, and even more preferably 800 to 1000. When the vinyl chloride-based resin B is a copolymer of vinyl chloride and a comonomer, the viscosity-average degree of polymerization is preferably 400 to 1500, more preferably 600 to 1300, and even more preferably 800 to 1200.

The vinyl chloride-based resin B may be produced using any polymerization method such as emulsion polymerization, bulk polymerization, or suspension polymerization, but is preferably produced through suspension polymerization from the viewpoint of suppressing initial coloration of the fibers.

### Vinyl Chloride-Based Resin Composition

The vinyl chloride-based resin composition includes the vinyl chloride-based resin A and the vinyl chloride-based resin B as a vinyl chloride-based resin. When the total amount of the vinyl chloride-based resin A and the vinyl chloride-based resin B is 100 mass%, the vinyl chloride-based resin composition preferably includes the vinyl chloride-based resin A in an amount of 10 mass% or more, more preferably 15 mass% or more, and even more preferably 20 mass% or more, from the viewpoint of easily obtaining vinyl chloride-based fibers with a small fineness. When the total amount of the vinyl chloride-based resin A and the vinyl chloride-based resin B is 100 mass%, the vinyl chloride-based resin composition preferably includes the vinyl chloride-based resin A in an amount of 80 mass% or less, more preferably 70 mass% or less, even more preferably 60 mass% or less, and particularly preferably 50 mass% or less, from the viewpoint of easily suppressing a decrease in thermal resistance. More specifically, when the total amount of the vinyl chloride-based resin A and the vinyl chloride-based resin B is 100 mass%, the vinyl chloride-based resin composition preferably includes the vinyl chloride-based resin A in an amount of 10 to 80 mass% and the vinyl chloride-based resin B in an amount of 20 to 90 mass%, more preferably includes the vinyl chloride-based resin A in an amount of 15 to 70 mass% and the vinyl chloride-based resin B in an amount of 30 to 85 mass%, even more preferably includes the vinyl chloride-based resin A in an amount of 20 to 60 mass% and the vinyl chloride-based resin B in an amount of 40 to 80 mass%, and particularly preferably includes the vinyl chloride-based resin A in an amount of 20 to 50 mass% and the vinyl chloride-based resin B in an amount of 50 to 80 mass%, from the viewpoint of improving the compatibility between the small fineness and the thermal resistance.

The vinyl chloride-based resin composition may include a plasticizer to an extent that a significant decrease in the thermal resistance is suppressed while the spinnability is improved. A known plasticizer for a vinyl chloride-based resin can be appropriately used as the plasticizer. Examples thereof include a trimellitic acid ester-based plasticizer, a phthalic acid-based plasticizer, a pyromellitic acid ester-based plasticizer, an epoxy-based plasticizer, a polyester-based plasticizer, a fatty acid ester-based plasticizer, and the like.

The trimellitic acid ester-based plasticizer is not particularly limited, but examples thereof include trioctyl trimellitate, triisooctyl trimellitate, triisodecyl trimellitate, and the like.

The phthalic acid ester-based plasticizer is not particularly limited, but examples thereof include dibutyl phthalate, diisobutyl phthalate, dioctyl phthalate, diisooctyl phthalate, and the like.

The pyromellitic acid ester-based plasticizer is not particularly limited, but examples thereof include tetrabutyl pyromellitate, tetraoctyl pyromellitate, and the like.

The epoxy-based plasticizer is not particularly limited, but examples thereof include epoxidized soybean oil, epoxidized linseed oil, (2-ethylhexyl)-epoxidized tall oil fatty acid, and the like.

The polyester-based plasticizer is not particularly limited, but examples thereof include adipic acid-based polyester-based plasticizers such as (1,3-butanediol)(2-ethylhexanol) adipate-based polyester and (propylene glycol)(coconut oil fatty acid) adipate-based polyester, and sebacic acid polyester-based plasticizers such as (1,6-hexanediol)(2-ethylhexanol) sebacate-based polyester.

The fatty acid ester-based plasticizer is not particularly limited, but examples thereof include sebacic acid ester-based plasticizers such as dioctyl sebacate (DOS), azelaic acid ester-based plasticizers such as dioctyl azelate (DOZ), adipic acid ester-based plasticizers such as dioctyl adipate (DOA), diisodecyl adipate (DIDA), and diisononyl adipate (DINA), and the like.

One of the plasticizers described above may be used alone, or two or more of them may be used in combination.

The plasticizer is preferably one or more selected from the group consisting of the trimellitic acid ester-based plasticizer, the phthalic acid ester-based plasticizer, the pyromellitic acid ester-based plasticizer, the epoxy-based plasticizer, and the adipic acid polyester-based plasticizer, more preferably one or more selected from the group consisting of the phthalic acid ester-based plasticizer and the epoxy-based plasticizer, and even more preferably one or more selected from the group consisting of epoxidized soybean oil, diisononyl phthalate, and bis(2-ethylhexyl) phthalate, from the viewpoint of the melt spinnability and the thermal resistance.

The amount of the plasticizer is preferably 0.5 to 5 parts by mass, more preferably 0.6 to 4.5 parts by mass, even more preferably 0.7 to 4.2 parts by mass, even more preferably 1 to 4 parts by mass, and particularly preferably 1 to 3 parts by mass, with respect to 100 parts by mass of the vinyl chloride-based resins (100 parts by mass of the total amount of the vinyl chloride-based resin A and the vinyl chloride-based resin B). When the amount of the plasticizer added is 0.1 parts by mass or more, the melt viscosity of the vinyl chloride-based resin composition is reduced and thus pressure applied to a nozzle is likely to be reduced during spinning, which leads to an increase in the spinning stability. When the amount of the plasticizer added is 8 parts by mass or less, the thermal resistance does not significantly decrease and thus the thermal shrinkage of the vinyl chloride-based fibers is suppressed.

The vinyl chloride-based resin composition may further include a heat stabilizer for thermal stability. The heat stabilizer is not particularly limited as long as it imparts thermal stability. The heat stabilizer is preferably one or more heat stabilizers selected from the group consisting of an epoxy-based heat stabilizer, a hydrotalcite-based heat stabilizer, a tin-based heat stabilizer, a Ca-Zn-based heat stabilizer, and a β-diketone-based heat stabilizer from the viewpoint of suppressing coloration and ensuring transparency while improving melt processability.

For example, one or more compounds selected from the group consisting of butyl glycidyl ether, phenyl glycidyl ether, glycidyl methacrylate, propylene glycol diglycidyl ether, poly(propylene glycol) diglycidyl ether, polyethylene glycol diglycidyl ether, and glycidyl acrylate, a homopolymer thereof, or a copolymer thereof can be used as the epoxy-based heat stabilizer. Among these, it is preferable to use polyglycidyl methacrylate (homopolymer of glycidyl methacrylate), a copolymer of glycidyl methacrylate, tetrabromobisphenol A diglycidyl ether, hexahydrophthalic acid diglycidyl ester, hydrogenated bisphenol A diglycidyl ether, or the like from the viewpoint of coloration suppression and transparency.

The hydrotalcite-based heat stabilizer is not particularly limited as long as it is a hydrotalcite compound. The hydrotalcite-based heat stabilizer may be a natural hydrotalcite compound or a synthesized hydrotalcite compound. For example, ALCAMIZER (registered trademark) manufactured by Kyowa Chemical Industry Co., Ltd. or the like can be used.

The tin-based heat stabilizer is not particularly limited as long as it has a thermal stabilization effect. Examples thereof include mercapto tin-based heat stabilizers such as dimethyltin mercapto, dimethyltin mercaptide, dibutyltin mercapto, dioctyltin mercapto, a dioctyltin mercapto polymer, and dioctyltin mercapto acetate; maleate tin-based heat stabilizers such as dimethyltin maleate, dibutyltin maleate, dioctyltin maleate, and a dioctyltin maleate polymer; laurate tin-based heat stabilizers such as dimethyltin laurate, dibutyltin laurate, and dioctyltin laurate; and the like.

The Ca-Zn-based heat stabilizer is not particularly limited as long as it has a thermal stabilization effect. Examples thereof include zinc stearate, calcium stearate, zinc 12-hydroxystearate, calcium 12-hydroxystearate, and the like.

The β-diketone-based heat stabilizer is not particularly limited as long as it has a thermal stabilization effect. Examples thereof include stearoylbenzoylmethane (SBM), dibenzoylmethane (DBM), and the like.

One of these heat stabilizers may be used alone, or two or more of them may be used in combination.

The heat stabilizer is preferably one or more selected from the group consisting of polyglycidyl methacrylate, tetrabromobisphenol A diglycidyl ether, hydrotalcite, zinc 12-hydroxystearate, calcium 12-hydroxystearate, stearoylbenzoylmethane (SBM), and dibenzoylmethane (DBM) from the viewpoint of suppressing coloration and ensuring transparency while improving melt processability.

The vinyl chloride-based resin composition preferably includes the heat stabilizer in an amount of 0.1 to 30 parts by mass, more preferably 0.2 to 20 parts by mass, and even more preferably 0.5 to 10 parts by mass, with respect to 100 parts by mass of the vinyl chloride-based resins (100 parts by mass of the total amount of the vinyl chloride-based resin A and the vinyl chloride-based resin B). When the amount of the heat stabilizer is 0.1 parts by mass or more, a favorable coloration suppressing effect is obtained. When the amount of the heat stabilizer is 30 parts by mass or less, a favorable coloration suppressing effect is obtained, transparency can be ensured, and the mechanical properties of the vinyl chloride-based fibers deteriorate to a slight degree.

From the viewpoint of the friction between the vinyl chloride-based resin and a processing machine, a reduction in the heat generated due to shearing, and an improvement in the flowability and the releasability, the vinyl chloride-based resin composition may also include a lubricant as long as the object of the present invention is not compromised. Examples of the lubricant include fatty acid ester-based lubricants such as stearic acid monoglyceride and stearyl stearate; hydrocarbon-based lubricants such as liquid paraffin, paraffin wax, and synthetic polyethylene wax; fatty acid-based lubricants such as stearic acid; higher alcohol-based lubricants such as stearyl alcohol; aliphatic amide-based lubricants such as stearic acid amide, oleic acid amide, and erucic acid amide; alkylene fatty acid amide-based lubricants such as methylenebisstearic acid amide and ethylenebisstearic acid amide; metallic soap-based lubricants such as lead stearate, zinc stearate, calcium stearate, and magnesium stearate; and the like. One of these lubricants may be used alone, or two or more of them may be used in combination. The amount of the lubricant added may be 10 parts by mass or less, or 0.1 to 10 parts by mass, with respect to 100 parts by mass of the vinyl chloride-based resins (100 parts by mass of the total amount of the vinyl chloride-based resin A and the vinyl chloride-based resin B).

From the viewpoint of improving the stringiness, the vinyl chloride-based resin composition may also include a processing assistant as long as the object of the present invention is not compromised. A known processing assistant can be used as the processing assistant. For example, it is possible to use an acrylic processing assistant containing methyl methacrylate as a main component, a polyester-based processing assistant containing thermoplastic polyester as a main component, and the like. One of these processing assistants may be used alone, or two or more of them may be used in combination. The amount of the processing assistant used is preferably about 0.2 to 12 parts by mass with respect to 100 parts by mass of the vinyl chloride-based resins (100 parts by mass of the total amount of the vinyl chloride-based resin A and the vinyl chloride-based resin B).

The vinyl chloride-based resin composition may also include, as necessary, known compounding agents to be used in a vinyl chloride-based resin composition, such as a reinforcing agent, an ultraviolet absorber, an antioxidant, an antistatic agent, a filler, a flame retardant, a pigment, a foaming agent, and a crosslinking agent, as long as the object of the present invention is not compromised.

The vinyl chloride-based resin composition can be used in the form of a powder compound obtained through a method in which, for example, a blend of the vinyl chloride-based resin A, the vinyl chloride-based resin B, and optionally a plasticizer, a heat stabilizer, a lubricant, a processing assistant, and other additives is uniformly mixed or mixed and kneaded through an ordinary method such as hot-blending or cold-blending using a mixer and/or a mixing kneader and the like, or in the form of a pellet compound obtained by melt-kneading the powder compound, but there is no particular limitation thereto. A ribbon blender, a super mixer, a tumbler mixer, a Banbury mixer, a Henschel mixer, a mixing roll, or the like can be used as the mixer and/or the mixing kneader.

The blending order and the like are not particularly limited during the production of the powder compound, and any techniques can be used as long as the object of the present invention is not compromised. For example, it is possible to use a method in which the vinyl chloride-based resin A, the vinyl chloride-based resin B, and various additives are blended all at once; a method in which, for the purpose of uniformly blending liquid additives, the vinyl chloride-based resin A, the vinyl chloride-based resin B, and various powdery additives are blended in advance and then liquid additives are blended thereto, or the vinyl chloride-based resin A and the vinyl chloride-based resin B are blended in advance, liquid additives are then blended thereto, and lastly various powdery additives are blended thereto; a method in which various additives are blended first, and then the vinyl chloride-based resin A and the vinyl chloride-based resin B are blended; and the like. The conditions for the mixing operation, such as the temperature and the duration, are not particularly limited as long as a powder compound can be obtained. From the viewpoint that a powder compound can be easily obtained and various additives are adsorbed on the surfaces of the grains of powder of the vinyl chloride-based resins (the vinyl chloride-based resin A and the vinyl chloride-based resin B) if necessary, the temperature may be set to be within a range of 0°C to 120°C during the mixing operation and be lowered to a temperature that is lower by 10°C or more than the glass-transition temperature of the powder compound at the end of the mixing operation such that the grains of powder do not adhere to one another or to the equipment such as a pipe during transfer.

A pellet compound can be produced by melt-kneading the powder compound. The temperature during the melt-kneading is higher than or equal to the glass-transition temperature of the powder compound, and is preferably 40°C to 200°C, more preferably 80°C to 185°C, and even more preferably 100°C to 175°C, from the viewpoint of suppressing the thermal decomposition of the vinyl chloride-based resins. A kneader such as a single-screw extruder, a twin-screw extruder, or a plastomill can be used for melt-kneading, but there is no particular limitation thereto.

### Vinyl Chloride-Based Fiber

Vinyl chloride-based fibers can be obtained by melt-spinning the vinyl chloride-based resin composition (e.g., pellet compound). First, the vinyl chloride-based resin composition is melt-spun to produce undrawn yarn. Specifically, after a melt-kneaded product (pellet compound) obtained by melt-kneading the vinyl chloride-based resin composition using an extruder (e.g., a single-screw extruder, a counter-rotation twin-screw extruder, or a conical twin-screw extruder) is discharged from a spinning nozzle using the extruder, and a discharged filament is allowed to pass through a heating tube and is thus heated, undrawn yarn is produced by taking up the filament while cooling it using a technique such as air cooling or air blast cooling, and is then wound around a bobbin. It is preferable to operate the extruder at a temperature within a range of, for example, 120°C to 200°C. The ratio of the take-up speed to the discharge speed is not particularly limited, but, for example, the filament is preferably taken up at the speed ratio within a range of 1 to 100 times, and more preferably taken up at the speed ratio within a range of 5 to 50 times from the viewpoint of the spinning stability.

The cross-sectional area of one nozzle hole of a spinning nozzle is preferably 0.2 mm² or less, more preferably 0.13 mm² or less, and even more preferably 0.06 mm² or less, from the viewpoint of easily obtaining undrawn yarn with a small fineness (e.g., undrawn yarn with a single fiber fineness of 60 dtex or less, and preferably a single fiber fineness of 30 dtex or less). The lower limit of the cross-sectional area of one nozzle hole of the spinning nozzle is not particularly limited, but may be 0.008 mm² or more, for example, from the viewpoint of preventing clogging in the nozzle. It is only necessary to match the cross-sectional shape of the nozzle hole with the intended cross-sectional shape of fibers, and, for example, a circular shape or another shape (elliptical shape or the like) other than the circular shape may be employed. The temperature of the spinning nozzle is preferably 160°C or higher and more preferably 170°C or higher. The temperature of the heating tube is preferably 200°C or higher and more preferably 230°C or higher. The cooling temperature for air cooling is preferably -196°C to 40°C and more preferably 0°C to 30°C, and the cooling temperature for water cooling is preferably 5°C to 60°C and more preferably 10°C to 40°C.

The vinyl chloride-based resin composition includes the vinyl chloride-based resin A, which is a copolymer of vinyl chloride and a macromonomer, and can thus be stably spun even when the single fiber fineness of undrawn yarn is 60 dtex or less, and favorably even when the single fiber fineness of undrawn yarn is 30 dtex or less. Thus, drawn yarn with a small fineness can be obtained without increasing the drawing ratio, and can be favorably used as not only fibers for artificial hair but also fibers for clothing and the like. The single fiber fineness of undrawn yarn is preferably 10 to 30 dtex and more preferably 20 to 30 dtex from the viewpoint of easily obtaining drawn yarn with a small fineness without increasing the drawing ratio while improving the spinning stability.

Drawn yarn (fiber) with a small fineness can be obtained by conducting a drawing process on the undrawn yarn obtained above in accordance with a known method and optionally conducting a thermal relaxation process. The single fiber fineness of the drawn yarn is not particularly limited, but is preferably 1 to 15 dtex and more preferably 2 to 5 dtex from the viewpoint of favorably using the drawn yarn as fibers for clothing as well. The drawing process is conducted under the following conditions: the drawing temperature is 70°C to 150°C under a dry heat atmosphere, and the drawing ratio is preferably about 1.1 to 6 times and more preferably about 1.5 to 4.5 times. Conducting the thermal relaxation process on the fibers that had been subjected to the drawing process such that the fibers are preferably relaxed at a relaxation rate of 1% to 50% and more preferably at a relaxation rate of 5% to 40% makes it possible to reduce the thermal shrinkage ratio. It is also possible to control the fineness by washing the undrawn yarn or the drawn yarn with water.

The glass-transition temperature of the vinyl chloride-based fibers measured through dynamic viscoelasticity measurement (dynamic mechanical analysis (DMA)) in conformity with JIS K 0129: 2005 is preferably 90°C or higher, more preferably 91°C or higher, even more preferably 92°C or higher, even more preferably 93°C or higher, and particularly preferably 94°C or higher, from the viewpoint of the thermal resistance. When the glass-transition temperature is within the range above, it is possible to suppress shrinkage at the time of application of heat. The upper limit of the glass-transition temperature is not particularly limited, but may be, for example, 100°C or lower from the viewpoint of the practical thermal resistance.

The tensile strength of the vinyl chloride-based fibers is preferably 1.7 cN/dtex or more, more preferably 1.8 cN/dtex or more, even more preferably 1.9 cN/dtex or more, even more preferably 2.0 cN/dtex or more, and particularly preferable 2.1 cN/dtex or more, from the viewpoint of the practical strength. The upper limit of the tensile strength is not particularly limited, but may be, for example, 2.5 cN/dtex or less from the viewpoint of the practical strength.

The vinyl chloride-based fibers may be used as artificial hair for hair ornament products such as a wig and weaving hair, and can also be used for industrial materials such as clothing and filters.

### Examples

Hereinafter, the present invention will be described in more detail by way of examples. Note that the present invention is not limited to the following examples. In the following description, the term "part(s)" means "part(s) by mass" unless otherwise stated.

First, various measurement methods and evaluation methods will be described.

### (1) Mass Average Molecular Weight

The mass average molecular weight was measured using HLC-8320 GPC System manufactured by Tosoh Corporation by injecting a sample solution with a polymer concentration of 1 mg/mL thereinto under the conditions that chloroform was used as a mobile phase, a polystyrene gel column TSKgel SuperHM-N manufactured by Tosoh Corporation was used, and the column temperature was 40°C.

### (2) Method-B Flow Value

The flow value per second of a resin was determined using a Koka-type flow tester ("CFT-500C" manufactured by Shimadzu Corporation) in conformity with "Test Method for Flow of Thermoplastic Resin" specified in Annex C of JIS K 7210-1: 2014 under the conditions that the test temperature was 180°C, the die length was 1 mm, the die diameter was 1 mm, and the test load was 9.8×10 N, and the thus-determined value was taken as a Method-B flow value.

### (3) Viscosity-Average Degree of Polymerization

A K value was measured based on JIS K 7367-2: 2002 and was taken as a viscosity-average degree of polymerization.

### (4) Glass-Transition Temperature

The glass-transition temperature was measured using a dynamic viscoelasticity measurement apparatus (manufactured by Thermo Fisher Scientific, trade name "HAAKE MARS40") in conformity with JIS K 0129: 2005.

### (5) Single Fiber Fineness

The single fiber fineness was measured in conformity with JIS L 1013: 2021.

### (6) Tensile Strength

The tensile strength was measured in conformity with JIS L 1013: 2021.

### (7) Spinnability

The spinnability of undrawn yarn was evaluated according to the following four levels by counting the number of yarn breakages.
1 0 to 1 yarn breakage / 3 minutes
2 2 to 3 yarn breakages / 3 minutes
3 4 or more yarn breakages / 3 minutes
4 There were too many yarn breakages and thus the yarn could not be wound around a bobbin

### Production Example 1

5.54 g of CuBr was charged into a 2-L separable flask with a reflux tube and a stirrer, and the inside of the separable flask was purged with nitrogen. Then, 73.8 mL of acetonitrile was added, the separable flask was placed in an oil bath at 70°C, and the content was stirred for 30 minutes. Thereafter, 132 g of n-butyl acrylate, 7.2 mL of methyl 2-bromopropionate, and 4.69 mL of pentamethyldiethylenetriamine were added to the separable flask to initiate a reaction. n-Butyl acrylate (528 g) was continuously added dropwise over 90 minutes while the mixture was being heated and stirred at 70°C, and then the resulting mixture was further heated and stirred at 70°C for 80 minutes. The reaction mixture was diluted with toluene and was passed through an activated alumina column, and then volatile matter was distilled off under reduced pressure to obtain poly(n-butyl acrylate) with a Br group at one terminus.

800 mL of methanol was charged into a flask and was cooled to 0°C. t-Butoxypotassium (130 g) was added thereto in portions over several times.

Subsequently, the flask was kept at 0°C, and 200 mL of a methanol solution (concentration: 0.5 g/mL) of acrylic acid (100 g) was added dropwise. Thereafter, the temperature of the reaction solution was returned from 0°C to room temperature, and then the volatile matter in the reaction solution was distilled off under reduced pressure to obtain potassium acrylate (CH₂=CHCO₂K).

150 g of poly(n-butyl acrylate) with a Br group at one terminus obtained above, 7.45 g of potassium acrylate obtained above, and 150 mL of dimethylacetamide were charged into a 500-mL flask with a reflux tube and were heated and stirred at 70°C for 3 hours. Thereafter, dimethylacetamide was distilled off from the reaction mixture, and the reaction mixture was dissolved in toluene and was passed through an activated alumina column. Then, toluene was distilled off to obtain poly(n-butyl acrylate) macromonomer with an acryloyl group at one terminus. The obtained macromonomer had a mass average molecular weight of 12000.

### Production Example 2

440 g of n-butyl acrylate, 220 g of methanol, 5.9 g of triethylamine, and 76 g of ethyl 2-bromoisobutyrate were charged into a 2-L separable flask with a reflux tube and a stirrer, and a separately prepared copper complex solution (a solution prepared by dissolving 0.22 g of copper(II) bromide in 22 g of methanol and mixing 0.22 g of tris[2-(dimethylamino)ethyl]amine with a purity of 96% with the resulting solution) was mixed thereinto. After nitrogen bubbling was conducted for 30 minutes, the mixture was stirred at 40°C to obtain a composition for polymerization. 0.34 g of ascorbic acid and 0.39 g of triethylamine were dissolved in 86 mL of methanol, which had been subjected to nitrogen bubbling for 30 minutes in advance, and the resulting ascorbic acid solution was added dropwise to the composition for polymerization obtained above to initiate polymerization. After 2 hours had elapsed from when the dropwise addition of the ascorbic acid solution was started, 660 g of n-butyl acrylate, which had been subjected to nitrogen bubbling for 30 minutes in advance, was added dropwise over 2 hours. After 6 hours had elapsed from when the dropwise addition of the ascorbic acid solution was started, the dropwise addition of the ascorbic acid solution was stopped to terminate the polymerization. At that time, the total amount of the ascorbic acid solution added dropwise was 40 mL. Next, the reaction solution was concentrated under reduced pressure at 80°C for 1 hour. 1100 g of butyl acetate, 11 g of an adsorbent (KYOWAAD (registered trademark) 500, manufactured by Kyowa Chemical Industry Co., Ltd.), and 11 g of an adsorbent (KYOWAAD (registered trademark) 700, manufactured by Kyowa Chemical Industry Co., Ltd.) were added to 1100 g of the concentrated reaction solution, and the resulting mixture was stirred at 100°C for 1 hour. Next, the obtained reaction solution was filtered. 2200 g of the obtained filtrate, 74 g of potassium acrylate, 4.4 g of the adsorbent (KYOWAAD (registered trademark) 700, manufactured by Kyowa Chemical Industry Co., Ltd.), 0.11 g of 4-hydroxy-2,2,6,6-tetramethylpiperidine-1-oxyl, and 1.2 g of tetra-n-butylammonium bromide were charged into a 2-L separable flask with a reflux tube and a stirrer, and the resulting mixture was stirred at 120°C for 3 hours. The obtained reaction solution was filtered to remove the adsorbent, and the obtained filtrate was further concentrated under reduced pressure at 120°C for 3 hours to obtain a poly(n-butyl acrylate) macromonomer with an acryloyl group at one terminus. The obtained macromonomer had a mass average molecular weight of 3000.

### Production Example 3

A poly(n-butyl acrylate) macromonomer with a crotonate group at one terminus was obtained in the same manner as in Production Example 1, except that 58 g of crotonic acid and 101 g of potassium carbonate were used instead of potassium acrylate. The obtained macromonomer had a mass average molecular weight of 3000.

### Production Example 4

Water in an amount equivalent to 40 parts with respect to all monomers was charged, as initial water, in advance into a stainless steel polymerization reactor with a jacket and a stirrer having an internal capacity of 25 liters, and 0.02 pats of partially saponified polyvinyl acetate with a saponification degree of about 80 mol% and an average polymerization degree of about 2000 was added thereto and dissolved under stirring at a rotation speed of 900 revolutions per minute while the temperature inside the polymerization reactor was controlled to be 20°C. 40 parts of the poly(n-butyl acrylate) macromonomer with an acryloyl group at one terminus of Production Example 1 was charged under stirring and the resulting mixture was degassed. Then, 60 parts of a vinyl chloride monomer was charged and then the resulting mixture was stirred for 10 minutes to disperse and mix the macromonomer in the vinyl chloride monomer. After 0.03 parts of t-butyl peroxyneodecanoate, 0.01 parts of 1,1,3,3-tetramethylbutyl peroxyneodecanoate were charged, 0.08 parts of partially saponified polyvinyl acetate with a saponification degree of about 80 mol% and an average polymerization degree of about 2000 and 0.005 parts of polyethylene oxide with an average molecular weight of about 4500000 were charged together with 110 parts of warm water at 60°C, and polymerization was conducted at a polymerization temperature of 57°C for about 6 hours. After the unreacted vinyl chloride monomer in the polymerization reactor was collected, the polymerization reactor was cooled, and a slurry was discharged. The obtained slurry was dehydrated and dried using a hot-air dryer at 60°C for 24 hours to obtain a graft copolymer of vinyl chloride and poly(n-butyl acrylate). The obtained graft copolymer (vinyl chloride-based resin A1) included vinyl chloride in an amount of 80 mass% and poly(n-butyl acrylate) in an amount of 20 mass%, and the conversion rate of the macromonomer was 100%. In the vinyl chloride-based resin A1, the stem polymer composed of vinyl chloride had a viscosity-average degree of polymerization of 700, and poly(n-butyl acrylate) serving as a branch polymer had a viscosity-average degree of polymerization of 90. The vinyl chloride-based resin A1 had a Method-B flow value of 11×10⁻² cm³/s.

### Production Example 5

A graft copolymer of vinyl chloride and poly(n-butyl acrylate) was obtained in the same manner as in Production Example 4, except that the poly(n-butyl acrylate) macromonomer with an acryloyl group at one terminus of Production Example 2 was used instead of the poly(n-butyl acrylate) macromonomer with an acryloyl group at one terminus of Production Example 1. The obtained graft copolymer (vinyl chloride-based resin A2) included vinyl chloride in an amount of 75 mass% and poly(n-butyl acrylate) in an amount of 25 mass%, and the conversion rate of the macromonomer was 100%. In the vinyl chloride-based resin A2, the stem polymer composed of vinyl chloride had a viscosity-average degree of polymerization of 700, and poly(n-butyl acrylate) serving as a branch polymer had a viscosity-average degree of polymerization of 22. The vinyl chloride-based resin A2 had a Method-B flow value of 74×10⁻² cm³/s.

### Production Example 6

A graft copolymer of vinyl chloride and poly(n-butyl acrylate) was obtained in the same manner as in Production Example 4, except that the poly(n-butyl acrylate) macromonomer with a crotonate group at one terminus of Production Example 3 was used instead of the poly(n-butyl acrylate) macromonomer with an acryloyl group at one terminus of Production Example 1. The obtained graft copolymer (vinyl chloride-based resin A3) included vinyl chloride in an amount of 76 mass% and poly(n-butyl acrylate) in an amount of 24 mass%, and the conversion rate of the macromonomer was 100%. In the vinyl chloride-based resin A3, the stem polymer composed of vinyl chloride had a viscosity-average degree of polymerization of 700, and poly(n-butyl acrylate) serving as a branch polymer had a viscosity-average degree of polymerization of 22. The vinyl chloride-based resin A3 had a Method-B flow value of 22×10⁻² cm³/s.

### Example 1

### Blending Step

80 parts by mass of a vinyl chloride homopolymer (manufactured by KANEKA CORPORATION; trade name: "S-1008"; viscosity-average degree of polymerization: 800) serving as a vinyl chloride-based resin B1, 20 parts by mass of the vinyl chloride-based resin A1 of Production Example 4, 1.4 parts by mass of a copolymer of vinyl chloride and ethylene-vinyl acetate (vinyl chloride: 90 mass%; ethylene-vinyl acetate: 10 mass%; viscosity-average degree of polymerization: 1000) serving as a vinyl chloride-based resin B2, 0.9 parts by mass of a plasticizer (epoxidized soybean oil), 1.09 parts by mass of a heat stabilizer (Ca-Zn-based heat stabilizer: 0.27 parts by mass; hydrotalcite-based heat stabilizer: 0.46 parts by mass; β-diketone-based heat stabilizer: 0.36 parts by mass), 2.93 parts by mass of a processing assistant (acrylic processing assistant), and 0.88 parts by mass of a lubricant (higher fatty acid-based lubricant: 0.14 parts by mass; fatty acid ester-based lubricant: 0.74 parts by mass) were added, and were stirred and mixed using a Henschel mixer to obtain a vinyl chloride-based resin composition (compound).

### Spinning Step

The compound obtained above was charged into a hopper unit of a single-screw extruder and was extruded to conduct melt spinning under the conditions that the cylinder temperature was within a range of 160±30°C and the nozzle temperature was within a range of 180±15°C. The nozzle hole had a circular cross-sectional shape. The extruded filaments was heated inside a heating tube (atmosphere at 300±50°C) provided just below the nozzle for about 0.5 to 1.5 seconds, and heated undrawn yarn was wound around a bobbin using a take-up roll. Undrawn yarn with a single fiber fineness of about 170 dtex, undrawn yarn with a single fiber fineness of about 60 dtex, and undrawn yarn with a single fiber fineness of about 30 dtex were evaluated for the spinnability. An attempt to obtain undrawn yarn with a single fiber fineness of 30 dtex was made, but the undrawn yarn could not be wound around a bobbin due to its poor spinnability.

### Drawing Step

The undrawn yarn with a single fiber fineness of about 60 dtex was placed in an oven in which the temperature was adjusted to 110±20°C and was drawn until the length was about 3.5 times as long as the original length. Next, a 25% relaxation process was subsequently conducted inside the oven in which the temperature was adjusted to 110±20°C, and vinyl chloride-based fibers with a single fiber fineness of about 20 dtex were obtained by winding a multifilament.

### Example 2

### Blending Step

A vinyl chloride-based resin composition (compound) was obtained in the same manner as in Example 1, except that the vinyl chloride-based resin A2 of Production Example 5 was used instead of the vinyl chloride-based resin A1 of Production Example 4.

### Spinning Step

Undrawn yarn was produced in the same manner as in Example 1, except that the compound obtained above was used. Undrawn yarn with a single fiber fineness of about 170 dtex, undrawn yarn with a single fiber fineness of about 60 dtex, and undrawn yarn with a single fiber fineness of about 30 dtex were evaluated for the spinnability.

### Drawing Step

The undrawn yarn with a single fiber fineness of about 30 dtex was placed in an oven in which the temperature was adjusted to 110±20°C and was drawn until the length was about 3.5 times as long as the original length. Next, a 25% relaxation process was subsequently conducted inside the oven in which the temperature was adjusted to 110±20°C, and vinyl chloride-based fibers with a single fiber fineness of about 10 dtex were obtained by winding a multifilament.

### Example 3

A vinyl chloride-based resin composition (compound), undrawn yarn, and vinyl chloride-based fibers with a single fiber fineness of about 30 dtex were obtained in the same manner as in Example 2, except that 60 parts by mass of the vinyl chloride homopolymer and 40 parts by mass of the vinyl chloride-based resin A2 of Production Example 5 were used. In the spinning step, undrawn yarn with a single fiber fineness of about 170 dtex, undrawn yarn with a single fiber fineness of about 60 dtex, and undrawn yarn with a single fiber fineness of about 30 dtex were evaluated for the spinnability.

### Example 4

### Blending Step

A vinyl chloride-based resin composition (compound) was obtained in the same manner as in Example 1, except that the vinyl chloride-based resin A3 of Production Example 6 was used instead of the vinyl chloride-based resin A1 of Production Example 4.

### Spinning Step

Undrawn yarn was produced in the same manner as in Example 1, except that the compound obtained above was used. Undrawn yarn with a single fiber fineness of about 170 dtex, undrawn yarn with a single fiber fineness of about 60 dtex, and undrawn yarn with a single fiber fineness of about 30 dtex were evaluated for the spinnability.

### Drawing Step

The undrawn yarn with a single fiber fineness of about 30 dtex was placed in an oven in which the temperature was adjusted to 110±20°C and was drawn until the length was about 3.5 times as long as the original length. Next, a 25% relaxation process was subsequently conducted inside the oven in which the temperature was adjusted to 110±20°C, and vinyl chloride-based fibers with a single fiber fineness of about 10 dtex were obtained by winding a multifilament.

### Comparative Example 1

### Blending Step

A vinyl chloride-based resin composition (compound) was obtained in the same manner as in Example 1, except that 100 parts by mass of a vinyl chloride homopolymer (manufactured by KANEKA CORPORATION; trade name: "S-1008"; viscosity-average degree of polymerization: 800) was used and the vinyl chloride-based resin A1 was not used.

### Spinning Step

Undrawn yarn was produced in the same manner as in Example 1, except that the compound obtained above was used. Undrawn yarn with a single fiber fineness of about 170 dtex, undrawn yarn with a single fiber fineness of about 60 dtex, and undrawn yarn with a single fiber fineness of about 30 dtex were evaluated for the spinnability. An attempt to obtain undrawn yarn with a single fiber fineness of 60 dtex and undrawn yarn with a single fiber fineness of 30 dtex was made, but they could not be wound around a bobbin due to their poor spinnability.

### Drawing Step

The undrawn yarn with a single fiber fineness of about 170 dtex was placed in an oven in which the temperature was adjusted to 110±20°C and was drawn until the length was about 3.5 times as long as the original length. Next, a 25% relaxation process was subsequently conducted inside the oven in which the temperature was adjusted to 110±20°C, and vinyl chloride-based fibers with a single fiber fineness of about 70 dtex were obtained by winding a multifilament.

### Comparative Example 2

### Blending Step

A vinyl chloride resin composition (compound) was obtained in the same manner as in Comparative Example 1, except that 5 parts by mass of the plasticizer was used.

### Spinning Step

Undrawn yarn was produced in the same manner as in Example 1, except that the compound obtained above was used. Undrawn yarn with a single fiber fineness of about 170 dtex, undrawn yarn with a single fiber fineness of about 60 dtex, and undrawn yarn with a single fiber fineness of about 30 dtex were evaluated for the spinnability. An attempt to obtain undrawn yarn with a single fiber fineness of 30 dtex was made, but the undrawn yarn could not be wound around a bobbin due to its poor spinnability.

### Drawing Step

The undrawn yarn with a single fiber fineness of about 60 dtex was placed in an oven in which the temperature was adjusted to 110±20°C and was drawn until the length was about 3.5 times as long as the original length. Next, a 25% relaxation process was subsequently conducted inside the oven in which the temperature was adjusted to 110±20°C, and vinyl chloride-based fibers with a single fiber fineness of about 20 dtex were obtained by winding a multifilament.

### Comparative Example 3

### Blending Step

A vinyl chloride resin composition (compound) was obtained in the same manner as in Comparative Example 1, except that 10 parts by mass of the plasticizer was used.

### Spinning Step

Undrawn yarn was produced in the same manner as in Example 1, except that the compound obtained above was used. Undrawn yarn with a single fiber fineness of about 170 dtex, undrawn yarn with a single fiber fineness of about 60 dtex, and undrawn yarn with a single fiber fineness of about 30 dtex were evaluated for the spinnability.

### Drawing Step

The undrawn yarn with a single fiber fineness of about 30 dtex was placed in an oven in which the temperature was adjusted to 110±20°C and was drawn until the length was about 3.5 times as long as the original length. Next, a 25% relaxation process was subsequently conducted inside the oven in which the temperature was adjusted to 110±20°C, and vinyl chloride-based fibers with a single fiber fineness of about 10 dtex were obtained by winding a multifilament.

The glass-transition temperature and the tensile strength of the vinyl chloride-based fibers obtained in Examples 1 to 4 and Comparative Examples 1 to 3 were measured as described above. Table 1 below shows the results. Table 1 also shows the results of the evaluation of the spinnability.

**Table 1**

| | | | Ex. | | | | Comp. Ex. | | |
|---|---|---|---|---|---|---|---|---|---|
| | | | 1 | 2 | 3 | 4 | 1 | 2 | 3 |
| Blend (part by mass) | Vinyl chloride-based resin | A1 | 20 | | | | | | |
| | | A2 | | 20 | 40 | | | | |
| | | A3 | | | | 20 | | | |
| | | B1 | 80 | 80 | 60 | 80 | 100 | 100 | 100 |
| | | B2 | 1.4 | 1.4 | 1.4 | 1.4 | 1.4 | 1.4 | 1.4 |
| | Plasticizer | | 0.9 | 0.9 | 0.9 | 0.9 | 0.9 | 5 | 10 |
| Spinnability | 170 dtex | | 1 | 1 | 1 | 1 | 1 | 1 | 1 |
| | 60 dtex | | 3 | 1 | 1 | 1 | 4 | 3 | 1 |
| | 30 dtex | | 4 | 2 | 2 | 3 | 4 | 4 | 1 |
| Tensile strength (cN/dtex) | | | 1.7 | 2.1 | 2.3 | 2.2 | 1.6 | 1.5 | 1.5 |
| Glass-transition temperature (°C) | | | 90.3 | 94.0 | 94.5 | 92.2 | 97.1 | 62.0 | 60.0 |

In Examples 1 to 4 in which the vinyl chloride-based resin composition containing the vinyl chloride-based resin A, which was a copolymer of vinyl chloride and a macromonomer, was used, undrawn yarn with a single fiber fineness of about 60 dtex or less could be obtained with favorable spinnability. The vinyl chloride-based fibers of Examples 1 to 4 had a glass-transition temperature of 90°C or higher and had favorable thermal resistance.

In particular, in Examples 2 to 4 in which the macromonomer with a mass average molecular weight of 1000 to 10000 that had a polymer composed of ethylenically unsaturated monomers with a double bond in the main chain was used in the vinyl chloride-based resin A, undrawn yarn whose single fiber fineness was half of that of Example 1 in which the macromonomer with a mass average molecular weight of greater than 10000 was used, specifically undrawn yarn with a single fiber fineness of about 30 dtex or less, could be obtained with favorable spinnability, and the obtained vinyl chloride-based fibers had a high glass-transition temperature.

Meanwhile, in Comparative Example 1 in which the vinyl chloride-based resin composition that did not include the vinyl chloride-based resin A but included only the vinyl chloride-based resin B was used, undrawn yarn with a small fineness, specifically a single fiber fineness of about 60 dtex or less, could not be obtained. In Comparative Examples 2 and 3 in which the vinyl chloride-based resin composition that did not include the vinyl chloride-based resin A and included the plasticizer in an increased amount was used, undrawn yarn with a small fineness, specifically a single fiber fineness of about 60 dtex or less, could be obtained, but it had a glass-transition temperature of lower than 65°C and had poor thermal resistance.

The present invention is not particularly limited, but encompasses at least the following embodiments.
[1] A vinyl chloride-based fiber including a vinyl chloride-based resin composition,
   wherein the vinyl chloride-based resin composition includes a vinyl chloride-based resin A and a vinyl chloride-based resin B, and
   the vinyl chloride-based resin A is a copolymer of vinyl chloride and a macromonomer and the vinyl chloride-based resin B is a vinyl chloride-based resin other than the vinyl chloride-based resin A.
[2] The vinyl chloride-based fiber according to [1], wherein the macromonomer has a polymer composed of ethylenically unsaturated monomers with a double bond in a main chain, and has a mass average molecular weight of 1000 to 15000.
[3] The vinyl chloride-based fiber according to [1] or [2], wherein, in the macromonomer, a reactive functional group at a molecular terminus is one or more selected from the group consisting of an allyl group, a vinylsilyl group, a vinyl ether group, a dicyclopentadienyl group, and groups with a polymerizable carbon-carbon double bond represented by General Formula (1) below: 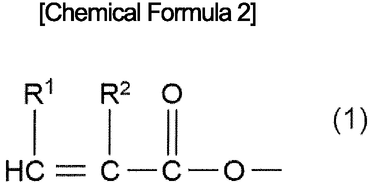 where R¹ and R² are the same or different, and independently represent hydrogen or an organic group having 1 to 20 carbon atoms.
[4] The vinyl chloride-based fiber according to any one of [1] to [3], wherein, in the macromonomer, a reactive functional group at a molecular terminus is an acryloyl group or a crotonate group.
[5] The vinyl chloride-based fiber according to any one of [1] to [4], wherein the macromonomer has a reactive functional group at one molecular terminus.
[6] The vinyl chloride-based fiber according to any one of [1] to [5], including a plasticizer in an amount of 0.5 to 5 parts by mass with respect to 100 parts by mass of a total amount of the vinyl chloride-based resin A and the vinyl chloride-based resin B.
[7] The vinyl chloride-based fiber according to any one of [1] to [6], wherein, when a total amount of the vinyl chloride-based resin A and the vinyl chloride-based resin B is taken as 100 mass%, a content of the vinyl chloride-based resin A is 10 to 80 mass%, and a content of the vinyl chloride-based resin B is 20 to 90 mass%.
[8] The vinyl chloride-based fiber according to any one of [1] to [7], wherein the vinyl chloride-based resin B includes a vinyl chloride homopolymer.
[9] The vinyl chloride-based fiber according to any one of [1] to [8], wherein the vinyl chloride-based resin B includes a vinyl chloride homopolymer in an amount of 100 parts by mass, and a vinyl chloride-vinyl acetate copolymer in an amount of 0.5 to 20 parts by mass.
[10] The vinyl chloride-based fiber according to any one of [1] to [9], having a single fiber fineness of 15 dtex or less.
[11] The vinyl chloride-based fiber according to any one of [1] to [10], having a tensile strength of 1.9 cN/dtex or more.
[12] The vinyl chloride-based fiber according to any one of [1] to [11], having a glass-transition temperature of 91.0°C or higher, the glass-transition temperature being measured in accordance with dynamic viscoelasticity measurement in conformity with JIS K 0129: 2005.
[13] A method for producing the vinyl chloride-based fiber according to any one of [1] to [12], including a step of obtaining undrawn yarn by melt-spinning a vinyl chloride-based resin composition,
   wherein the vinyl chloride-based resin composition includes a vinyl chloride-based resin A and a vinyl chloride-based resin B, and
   the vinyl chloride-based resin A is a copolymer of vinyl chloride and a macromonomer and the vinyl chloride-based resin B is a vinyl chloride-based resin other than the vinyl chloride-based resin A.
[14] The method for producing the vinyl chloride-based fiber according to [13], wherein the undrawn yarn has a single fiber fineness of 30 dtex or less.
[15] The method for producing the vinyl chloride-based fiber according to [13] or [14], further including a step of obtaining drawn yarn by drawing the undrawn yarn.

## Claims

1. A vinyl chloride-based fiber comprising a vinyl chloride-based resin composition,
wherein the vinyl chloride-based resin composition comprises a vinyl chloride-based resin A and a vinyl chloride-based resin B, and
the vinyl chloride-based resin A is a copolymer of vinyl chloride and a macromonomer and the vinyl chloride-based resin B is a vinyl chloride-based resin other than the vinyl chloride-based resin A.

2. The vinyl chloride-based fiber according to claim 1, wherein the macromonomer has a polymer composed of ethylenically unsaturated monomers with a double bond in a main chain, and has a mass average molecular weight of 1000 to 15000.

3. The vinyl chloride-based fiber according to claim 1, wherein, in the macromonomer, a reactive functional group at a molecular terminus is one or more selected from the group consisting of an allyl group, a vinylsilyl group, a vinyl ether group, a dicyclopentadienyl group, and groups with a polymerizable carbon-carbon double bond represented by General Formula (1) below: 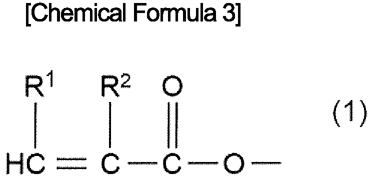 where R¹ and R² are the same or different, and independently represent hydrogen or an organic group having 1 to 20 carbon atoms.

4. The vinyl chloride-based fiber according to claim 1, wherein, in the macromonomer, a reactive functional group at a molecular terminus is an acryloyl group or a crotonate group.

5. The vinyl chloride-based fiber according to claim 1, wherein the macromonomer has a reactive functional group at one molecular terminus.

6. The vinyl chloride-based fiber according to claim 1, comprising a plasticizer in an amount of 0.5 to 5 parts by mass with respect to 100 parts by mass of a total amount of the vinyl chloride-based resin A and the vinyl chloride-based resin B.

7. The vinyl chloride-based fiber according to claim 1, wherein, when a total amount of the vinyl chloride-based resin A and the vinyl chloride-based resin B is taken as 100 mass%, a content of the vinyl chloride-based resin A is 10 to 80 mass%, and a content of the vinyl chloride-based resin B is 20 to 90 mass%.

8. The vinyl chloride-based fiber according to claim 1, wherein the vinyl chloride-based resin B comprises a vinyl chloride homopolymer.

9. The vinyl chloride-based fiber according to claim 1, wherein the vinyl chloride-based resin B comprises a vinyl chloride homopolymer in an amount of 100 parts by mass, and a vinyl chloride-vinyl acetate copolymer in an amount of 0.5 to 20 parts by mass.

10. The vinyl chloride-based fiber according to claim 1, having a single fiber fineness of 15 dtex or less.

11. The vinyl chloride-based fiber according to claim 1, having a tensile strength of 1.9 cN/dtex or more.

12. The vinyl chloride-based fiber according to claim 1, having a glass-transition temperature of 91.0°C or higher, the glass-transition temperature being measured in accordance with dynamic viscoelasticity measurement in conformity with JIS K 0129: 2005.

13. A method for producing the vinyl chloride-based fiber according to any one of claims 1 to 12, comprising a step of obtaining undrawn yarn by melt-spinning the vinyl chloride-based resin composition,
wherein the vinyl chloride-based resin composition comprises the vinyl chloride-based resin A and the vinyl chloride-based resin B, and
the vinyl chloride-based resin A is the copolymer of vinyl chloride and the macromonomer and the vinyl chloride-based resin B is the vinyl chloride-based resin other than the vinyl chloride-based resin A.

14. The method for producing the vinyl chloride-based fiber according to claim 13, wherein the undrawn yarn has a single fiber fineness of 30 dtex or less.

15. The method for producing the vinyl chloride-based fiber according to claim 13, further comprising a step of obtaining drawn yarn by drawing the undrawn yarn.
